Europäisches Patentamt

European Patent Office

Office européen des brevets

(11) Publication number: **0 254 686**
**A1**

# (12) EUROPEAN PATENT APPLICATION

(21) Application number: **87830195.1**

(22) Date of filing: **26.05.87**

(51) Int. Cl.⁴: **G 02 C 5/16**

(30) Priority: **24.06.86 IT 2235886**

(43) Date of publication of application:
**27.01.88 Bulletin 88/04**

(84) Designated Contracting States:
**AT BE CH DE ES FR GB LI LU NL SE**

(71) Applicant: **SAFILO S.p.A.**
**I-32044 Pieve di Cadore (Belluno) (IT)**

(72) Inventor: **Tabacchi, Vittorio**
**Piazza Tiziano, 7**
**I-32044 Pieve di Cadore Beliuno (IT)**

(74) Representative: **Perani, Aurelio et al**
**c/o JACOBACCI-CASETTA & PERANI S.N.C. Via Visconti di Modrone 7**
**I-20122 Milano (IT)**

(54) **An elastically deformable eyeglasses leg.**

(57) An eyeglasses leg (1) has an elastically deformable intermediate section formed of a length (2) of a wire strand. The wire strand length (2) is fastened to the remaining leg (1) sections by splicing (3,10).

Fig-1

EP 0 254 686 A1

## Description

This invention relates to an eyeglasses leg which incorporates an elastically deformable intermediate section.

A degree of elasticity must be imparted to the legs of eyeglasses, e.g. in order to enable a given eyeglasses frame to fit several different users.

To meet this requirement, a number of different approaches have been developed heretofore which are broadly directed to either provide a spring mount for the hinge connecting the eyeglasses leg to the frame, or to make a section of the leg adjoining the hinge elastically deformable.

As an example, the Utility Model Patent Application No. 3814-B/84, filed in Italy on May 25, 1984, discloses an eyeglasses leg which is made elastically deformable by having an intermediate section thereof formed of a coil spring.

In this case, securing the spring firmly to the remaining leg sections may be difficult, thereby an eyeglasses leg with that construction may lack strength. Furthermore, such an eyeglasses leg may be uncomfortable to use, since hair and eyelids can easily become entangled with the spring.

Not of least importance is the fact that the inboard side of the coil spring is difficult to keep clean by washing the glasses as usual, thereby it forms an area where dirt is apt to build up.

It is the object of this invention to provide an eyeglasses leg so constructed as to overcome all of the problems encountered in the cited prior art.

This object is achieved by an eyeglasses leg as indicated, which is characterized in that said intermediate leg section comprises a length of a wire strand.

The invention features and advantages will be more clearly understood from the following detailed description of a preferred but not exclusive embodiment thereof, given by way of illustration with reference to the accompanying drawings, where:

Figure 1 is a part-sectional perspective view of an eyeglasses leg embodying this invention;

Figure 2 is an enlarged scale view partly sectioned across a longitudinal plane and showing a detail of the leg of Figure 1; and

Figure 3 is a perspective view of the eyeglasses leg shown in the preceding drawing figures, with covering rings removed.

In the drawing figures, the reference numeral 1 designates comprehensively an eyeglasses leg embodying this invention.

The eyeglasses leg 1 has an intermediate section 2 which extends between opposed end sections indicated at 3 and 4, respectively. The section 2 is arranged to impart elasticity to the leg 1, and is formed from an elastically deformable wire strand.

The section 3 is a single piece metal construction having a substantially cylindrical body and a flattened surface 5 adjacent to its free end. A hinge member 5a is secured on the surface 5 to connect the leg 1 pivotally, in a manner known per se, to front bezels of an eyeglasses frame, not shown.

Thus, the section 3 forms a nosepiece for hingedly connecting the eyeglasses leg 1 to the lens bezel.

Formed in the cylindrical body of the section 3 is a blind axial cavity 6. Housed within the cavity 6 and fastened thereto is one end of the wire strand length which forms the section 2. Thus, the cylindrical body of the section 3 affords a means of end splicing said wire strand length.

A second end splicing is formed at the opposed end of the section 2. This second end splice is shown at 10 in the drawings.

The splice 10 has two axial cavities formed therein, as respectively indicated at 11 and 12. The cavity 11 accommodates the end of the wire strand length or section 2; a rod-like metal core 13 of the leg 1 makes an interference fit with the cavity 12 interior.

A covering 14 of plastics fits over the metal core 13.

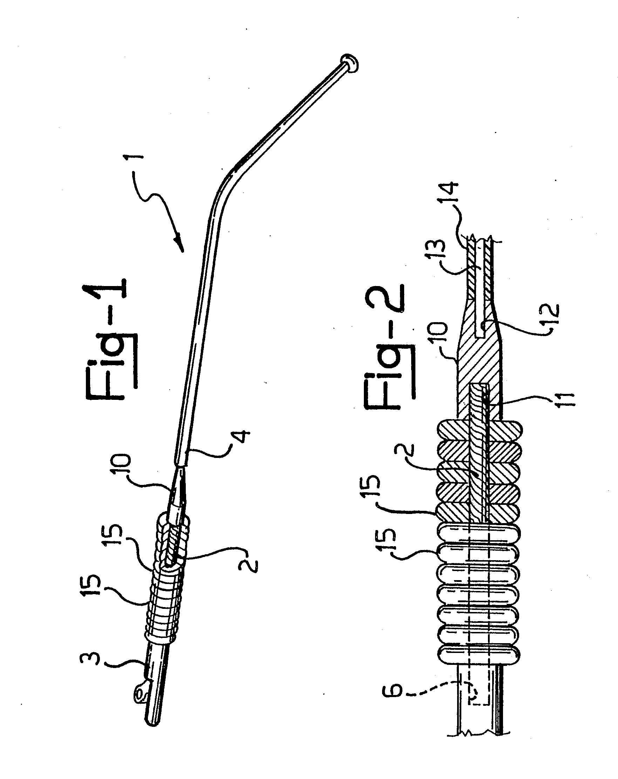

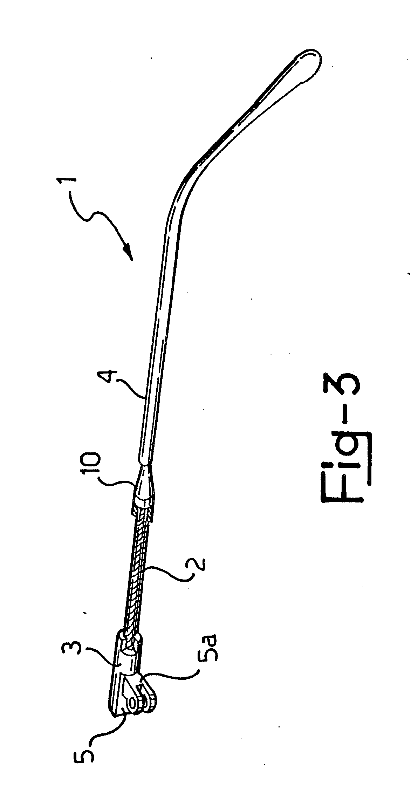

In the exemplary embodiment of Figures 1 and 2, a plurality of small rings 15 of an elastomeric material, such as synthetic rubber, are slid over the intermediate section 2 of wire strand.

Preferably, the rings 15 would be colored ones, with different colors applied to adjacent rings.

On a user putting on an eyeglasses frame equipped with the inventive legs, the eyeglasses legs are first spread apart by pivotal movement around their hinge connection nosepieces to a stop position.

When forced further apart, each of the legs undergoes local deformation in an elastic fashion at its intermediate section 2. On releasing the eyeglasses legs, they will spring back to their normal position with the intermediate section 2 on a straight line.

The eyeglasses leg herein is specially simple to assemble also on account of the intermediate section being fastened to its respective end section by a splicing method.

This eyeglasses leg is, moreover, free of all the disadvantages affecting prior eyeglasses legs.

### Claims

1. An eyeglasses leg incorporating an elastically deformable intermediate section, characterized in that said intermediate section comprises a length (2) of a wire strand.

2. An eyeglasses leg according to Claim 1, characterized in that said wire strand length (2) has respective splices (3,10) formed at opposed ends thereof, one of said splices being adapted to form a nosepiece (3) for hingedly connecting said leg.

3. An eyeglasses leg according to Claim 2, characterized in that the other (10) of said splices forms an anchor means for a metal core (13) of said leg.

4. An eyeglasses leg according to Claim 1, characterized in that it includes a covering (15) wrapped around said wire strand length (2).

5. An eyeglasses leg according to Claim 4, characterized in that said covering comprises a plurality of small rings (15) fitting over said intermediate section (2).

6. An eyeglasses leg according to Claim 5, characterized in that the rings (15) are formed from a colored elastomeric material with different colors between adjacent rings (15).

0254686

Fig-1

Fig-2

0254686

5 3 10 4 1

5a 2

**Fig-3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 295 429 (C.L. CURTET)<br>* Page 1, lines 33-65 *<br><br>--- | 1-6 | G 02 C 5/16 |
| A | GB-A- 542 876 (G. RATTI)<br>* Page 1, lines 1-68; page 3, lines 21-38 *<br><br>--- | 1-6 | |
| A | EP-A-0 061 555 (EUROPEAN OPTICS)<br>* Page 1 - page 3, line 21 *<br><br>--- | 1-6 | |
| A | GB-A- 490 050 (C.S. FAIRCLOTH)<br>* Whole document *<br><br>----- | 1-6 | |

|  |
|---|
| TECHNICAL FIELDS SEARCHED (Int. Cl.4) |
| G 02 C |

The present search report has been drawn up for all claims

| Place of search | Date of completion of the search | Examiner |
|---|---|---|
| THE HAGUE | 05-10-1987 | CALLEWAERT-HAEZEBROU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82